# EUROPEAN PATENT SPECIFICATION

(11) **EP 2 012 203 B1**
(45) Date of publication and mention of the grant of the patent: **01.05.2013**
(21) Application number: 08011493.7
(22) Date of filing: 25.06.2008
(51) Int. Cl.: G05B 19/042

(54) **Control unit for a cut-off device**
Steuereinheit für ein Absperrventil
Unité de contrôle pour dispositif de fermeture

(30) Priority: 05.07.2007 GB 0713019
(43) Date of publication of application: 07.01.2009
(73) Proprietor: Smyth, Conor, Holywood BT18 9NB (GB)
(72) Inventor: Smyth, Conor, Holywood BT18 9NB (GB)
(74) Representative: Waller, Stephen

(56) References cited:
- JP-A- 2003 028 400
- US-A1- 2002 167 228
- US-A1- 2004 201 485
- US-A1- 2007 118 638

## Description

### Field of the Invention

The present invention relates to a control unit for a cut-off valve of a fuel supply system, which may, for example, be used in gas or oil supply systems.

### Background to the Invention

It is a current legal requirement in the UK that gas systems, which are in use, are serviced regularly, preferably every 12 months. It is also a legal requirement that gas systems are serviced before use, in particular when the gas system has not been used for a period of time.

Circumstances exist where an owner or person responsible for a gas supply may not have direct access to the system, for example landlords who rent properties with gas supplies. In circumstances such as this, it is still the legal responsibility of the owner/landlord to have the gas supply serviced and it is the owner/landlord who will be held legally responsible if a problem occurs. Occasions can arise where the owner/landlord is prevented from or delayed from accessing the gas supply to allow servicing. This can lead to unwanted use of an un-serviced gas system and increased safety risks, or the gas supply being disconnected.

It would be desirable to provide an apparatus that mitigates the problems identified above.

US 2007/0118638 discloses a system for providing a user with abnormality information ocurring in home electronic appliances. JP 2003028400 dicloses gas supply cut off device for cutting off a gas supply when it is determined that there is a voltage drop in a power supply. US 2004/0201485 discloses a system for providing an alarm when an air filter requires replacement. US 2002/0617228 disclsoes a safety device for shutting off a kitchen appliance after a predetermined time period.

### Summary of the Invention

The invention provides a control unit as claimed in claim 1.

Preferably, the cut-off device controlling means is also activatable independently of the timer. Preferably, the cut-off device is activatable independently by way of a button or switch.

In a preferred embodiment, the cut-off device comprises a cut-off valve which is operable between an open state and a closed state. More preferably the cut-off device comprises a solenoid valve which is operable between an open state when electrical power is supplied and a closed state when electrical power is not supplied.

Preferably the cut-off device controlling means is activatable to operate the cut-off valve between an open state and a closed state.

Preferably, the cut-off device controlling system comprises means for overriding the cut-off device controlling means. Preferably the overriding means is activatable such that the cut-off device is operable between a closed state and an open state.

Preferably, the overriding means is activatable independently. Preferably, the overriding means is activatable independently by way of a button or switch. More preferably the overriding means can only be activated when the controlling means is automatically activated as a result of the timer counting a second pre-programmed period of time and not when the controlling means is independently activated.

Preferably, the reset system comprises means for re-programming the timer to count the first and second periods of time and means for causing the cut-off valve to adopt an open state if necessary such that the warning system and cut-off device controlling system are reset.

Preferably, the reset system is activatable independently. Preferably, the reset system is activatable independently by way of a button or switch.

In a preferred embodiment, the resetting means is activatable only by way of the fuel supply system being serviced.

In a preferred embodiment, the control unit comprises means for recording information, in particular the service history.

It is envisaged that the control unit may be adapted to serve as warning systems and/or cut-off systems for other devices that need regular servicing, for example, medical equipment, cars and lighting systems.

The advantages of the present invention include: the control unit gives a warning prior to a system requiring servicing; the control unit cuts-off the system requiring servicing if a service is not carried out before a programmed period of time; the cut-off the system can be independently activated if required; the control unit can only be reset by carrying out a service; and the control unit can serve as a means of recording a service history.

Further advantageous aspects of the invention will become apparent to those ordinarily skilled in the art upon review of the following description of a specific embodiment and with reference to the accompanying drawings.

### Brief Description of the Drawings

An embodiment of the invention is now described by way of example and with reference to the accompanying drawings in which like numerals are used to indicate like parts and in which:
FIGURE 1 shows a perspective view of a control unit embodying the invention;
FIGURE 2 shows an electronic block diagram of the control unit;
FIGURE 3 shows a flowchart indicating the preferred operation of the control unit; and
FIGURE 4 shows an alternative embodiment of the control unit.

### Detailed Description of the Drawings

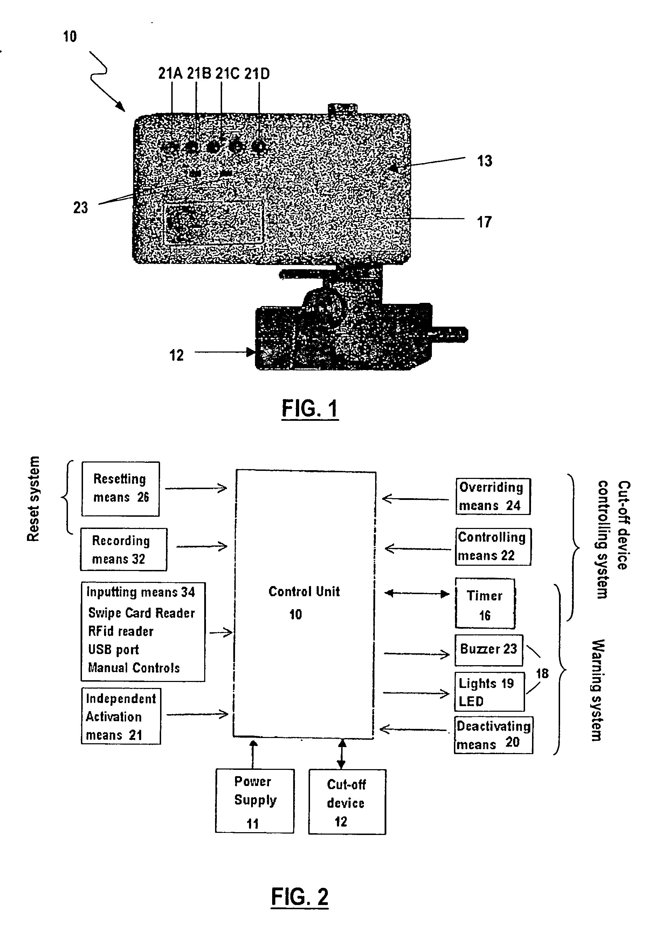

Referring now to Figure 1 of the drawings, there is shown, generally indicated as 10, a control unit embodying the invention. The control unit 10 comprises an electronic circuit having a warning system, a cut-off device controlling system and a reset system. The electronic circuit is contained within a housing 13. In a preferred embodiment, the housing 13 comprises a first, or rear, face attachable to a wall or surface and a second, or obverse face, 17.

As shown in Figure 1, the control unit 10 is connectable to a cut-off device 12. In the illustrated embodiment, the cut off device 12 takes the form of a cut-off valve 12 which forms part of a gas supply system (not shown). It is envisaged however, that the cut-off device 12 may alternatively take the form of a cut-off valve which can be used in other supply systems, e.g. an oil supply system. The cut-off valve 12 is operable between an open state and a closed state. When the cut-off valve 12 is in an open state the gas supply system can be used but when the cut-off valve 12 is in a closed state the gas supply is isolated. In a preferred embodiment, the cut-off valve 12 comprises a solenoid valve 12, which is operable between an open state when supplied with electricity and a closed state when not supplied with electricity (or vice versa). An advantage of using a solenoid valve 12 is that it provides a fail-safe cut-off device 12 since the cut-off device 12 is adjusted to a normal closed state when electricity is not supplied. The control unit 10, when in use, controls the operation of the cut-off valve 12 and therefore controls the operation of the gas supply system.

Referring to Figure 2, the warning system comprises a timer 16 and means for generating an alarm signal 18. The alarm signal generating means 18 may comprise a single form of alarm signal or more preferably a plurality of alarm signals. In a preferred embodiment, the alarm signal generating means 18 comprises audio and/or visual alarm signals, for example, buzzers 23 and/or lights 19. As shown in Figure 1 the lights 19 may be provided on the obverse face 17 of the housing 13. Preferably the lights 19 are LED type lights. The timer 16 is programmable to count periods of real time. The alarm signal generating means 18 is automatically activated to generate an alarm signal when a preset period of time expires. In a preferred embodiment, the timer 16 is pre-programmed to count a first period of time and the alarm signal generating means 18 is automatically activated when the first period of time expires.

As shown in the illustrated embodiment, the warning system may also comprise means for deactivating 20 the alarm signal generating means 18. The alarm signal deactivating means 20 is independently activated by a user, preferably by way of a button or switch 21A provided on the obverse face 17 of the housing 13 as shown in Figure 1. In a preferred embodiment, the alarm signals may be only partially deactivated. For example, if the alarm signal generating means 18 comprises an audio alarm signal such as a buzzer 23 and a visual alarm signal such as a light 19, the user may deactivate the buzzer 23 but the light 19 may remain activated or become activated. A number of alternative alarm signal configurations are envisaged. For example, if the alarm signal generating means 18 comprises only visual alarms such as lights 19, the lights 19 may be partially deactivated whereby a first light of one colour light 19 is deactivated but a second light 19 of a different colour remains activated or becomes activated. Alternatively the buzzer 23 may be activated periodically or the lights 19 may flash periodically. By partially deactivating the alarm signal generating means 18, the remaining activated alarm signals serve as a reminder that the warning system has been activated.

The cut-off device controlling system comprises the timer 16 and means for controlling the cut-off device 22. The cut-off device controlling means 22 controls the operation of the cut-off valve 12 such that the cut-off valve 12 is operated from an open state to a closed state.
In a preferred embodiment, where the cut-off device comprises a solenoid valve 12, the cut-off device controlling means 22 controls the power supply 11 to the solenoid valve 12, such that, when activated the power supply 11 is diverted away from the solenoid valve 12 and the valve 12 is adjusted from an open state to a closed state. The controlling means 22 is automatically activated when the timer 16 counts a programmed period of time. In a preferred embodiment, the timer 16 is pre-programmed to count a second period of time and the controlling means 22 is automatically activated when the second period of time expires.

In a preferred embodiment, the second period of time is greater than the first period of time such that the warning system may be activated before the cut-off device controlling system. It is envisaged however that the first and second periods of time may be any length of time. It is also envisaged that the first and second periods of time may be equal or different, and that, if different the second period of time may alternatively be shorter than the first period of time.

In addition, the controlling means 22 can be activated independently of the timer 16 (i.e. the controlling means 22 may be activated at any time). The controlling means 20 is independently activated by a user, preferably by way of a button or switch 21 B provided on the obverse face 17 of the housing 13 as shown in Figure 1.

The cut-off device controlling system also comprises means for overriding 24 the controlling means 22. The overriding means 24 is independently activated by a user, preferably by way of a button or switch 21C provided on the obverse face 17 of the housing 13 as shown in Figure 1. The overriding means 24 controls the operation of the cut-off valve 12 such that the cut-off valve 12 is operated from a closed state to an open state. In a preferred embodiment, where the cut-off device comprises a solenoid valve 12, the overriding means 24 controls the power supply 11 to the solenoid valve 12, such that when activated the power supply 11 is directed to the solenoid valve 12 and the valve 12 is adjusted from a closed state to an open state. The overriding means 24 can be activated at any time once the valve 12 has been adjusted from an open state to a closed state as a result of the controlling means 22 being activated by the expiry of a programmed period of time as counted by the timer 16. The overriding means 24 however, cannot be activated once the valve 12 has been closed as a result of the independent activation of the controlling means 22.

The resetting system comprises means for resetting 26 the warning system and cut-off controlling system. The resetting means 26 is independently activated by a user, preferably by way of a button or switch 21D provided on the obverse face 17 of the housing 13 as shown in Figure 1. When the resetting means 26 is activated the timer 16 is re-programmed to count the periods of real time and the cut-off valve 12 is reset to an open state if necessary. The resetting means 26 can be activated at any time, i.e. before the alarm signal generating means 18 is activated; after the alarm signal generating means 18 is activated; after the alarm signal generating means 18 is activated and the alarm deactivating means 20 is activated; after the controlling means 22 is activated; or after the overriding means 24 is activated.

An electricity supply 11 is provided to power the electronic circuit and its components and in the preferred embodiment the solenoid valve. Preferably the electricity supply is derived from the mains electricity supply, though more preferably a battery is also provided as a back up power supply.

In the illustrated embodiment it is envisaged that the warning system serves to warn users that the gas supply system is due a service and the cut-off controlling system serves to cut-off the gas supply system if the service is not carried out.

When the preferred embodiment is in use therefore, the timer 16 is pre-programmed to count first and second periods of time whereby the first period of time is less than the period of time in which a service is due and the second period of time is equal to the period of time in which a service is due. In the illustrated embodiment it is assumed by way of example only that the gas supply system needs serviced every 12 months. As a result the first period of time may be pre-programmed as approximately 10-11 months from the date the gas supply system was previously serviced and the second period of time may be pre-programmed as 12 months from the date the gas supply system was previously serviced. This gives the user 1-2 months to organise a gas supply service to be carried out once the warning system has been activated but before the cut-off device controlling system is activated and the gas supply is cut-off.

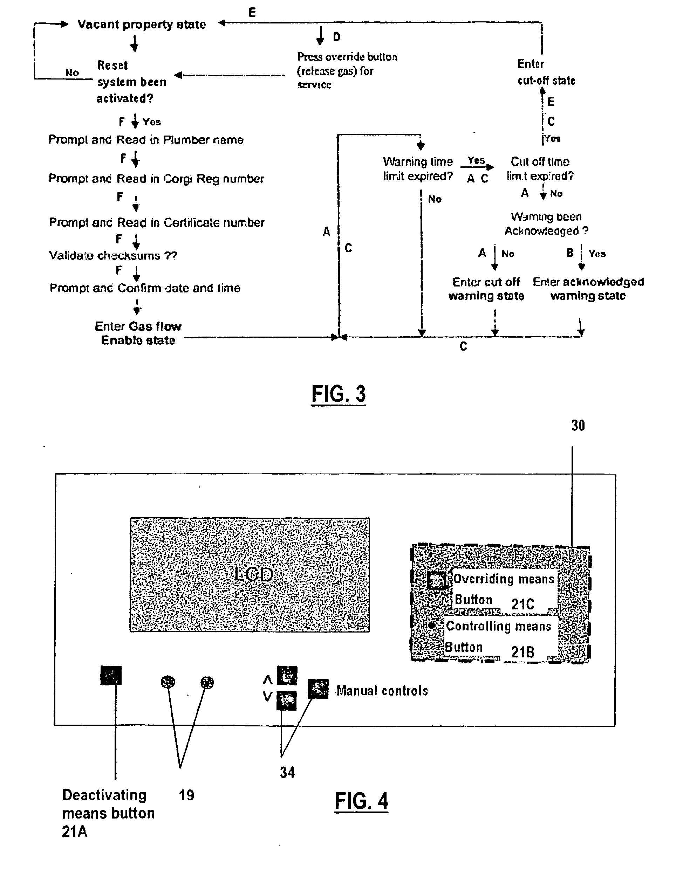

Referring to Figure 3, when the control unit 10 and cut-off valve 12 are in use and the timer 16 counts the first and second pre-programmed periods of time, the cut-off valve 12 is maintained in an open state such that the gas supply system can be used (referring to Figure 3 this open state is indicated as "gas flow enabled state"). In a preferred embodiment, where the cut-off valve 12 comprises a solenoid valve 12 the solenoid valve is maintained in an open state by the control unit 10 directing the electricity supply 11 to the solenoid valve.

Referring to the arrows indicated as A in Figure 3, when the first pre-programmed period of time (indicated as warning time) expires but the second period of time (indicated as cut-off time) has not expired the alarm signal generating means 18 is automatically activated and the alarm signal is generated (indicated as "enter cut-off warning state"). Activation of the warning system indicates to a user that the gas supply system is due to be serviced soon.

Referring to the arrows indicated as B, Figure 3 illustrates a preferred embodiment where the user may deactivate the alarm signals (indicated as "enter acknowledged warning state"). Deactivating the alarm signal allows a user to acknowledge that the alarm signal generating means 18 has been activated. As described above, in a preferred embodiment, the alarm signals are only partially deactivated such that the remaining activated alarm signals may serve as a reminder that the warning system has been activated and that a service is still due.

Referring to the arrows indicated as C in Figure 3, after the warming system is activated the timer 16 will continue to count the second pre-programmed period of time until either the gas supply system is serviced or the second period of time expires.

If the gas supply system is serviced, the control unit 10 is reset by activating the resetting means 26 such that the timer 16 is re-programmed to count the first and second periods of time from the date the service was carried out. The warning system therefore serves to warn users when the next service is due and the cut-off controlling system serves to cut-off the gas supply system when the next service is due if a service is not carried out.

If the gas supply system is not serviced and the second period of time expires then the controlling means 22 is automatically activated (indicated as "enter cut-off state") and the cut-off valve 12 is adjusted from an open state to a closed state such that the gas supply is cut-off.

If the gas supply system is serviced after the controlling means 22 is activated then the control unit 10 is again reset by activating the resetting means 26 such that the timer 16 is re-programmed to count the first and second periods of time from the date the service was carried out. In addition however the cut-off valve 12 is adjusted from the closed state to an open state such that the gas supply can be reused.

If the gas supply system is not serviced after the controlling means 22 is activated the user has the opportunity to activate the overriding means 24 (indicated by arrow D in Figure 3). Activating the overriding means 24 results in the cut-off valve 12 being adjusted from a closed state to an open state. The overriding means provides the users to opportunity to resume the gas supply even though a service has not been carried out.

Referring to arrows indicated as E in Figure 3, if it is known that the gas supply system will not be used for some time then the controlling means 22 may be activated independently. Activating the controlling means 22 independently operates the cut-off valve 12 from an open state to a closed state such that the gas supply is cut-off and in addition deactivates the warning system and cut-off device controlling system. If the controlling means 22 is activated independently the cut-off device 12 can only be caused to adapt to an open state by activating the resetting means 26. This means that if the gas supply system has been cut of independently because the gas has not been used for a period of time then the gas supply system must be serviced to restart the system.

In a preferred embodiment, the resetting means 26 can only be activated by the gas supply system being serviced (indicated by arrows F in Figure 3). To this end it is envisaged that the control unit 10 comprises means for recording service details. As shown in Figure 2, the control unit 10 may comprise recording means 32, such as conventional computer memory, and means for inputting 34 the service details such as manual input controls or more preferably electronic input means 34 such as a swipe card reader, Rapid reader or USB port. In a preferred embodiment the control unit 10 may comprise a screen such as an LCD screen which allows the service details to be visualised. Preferably the screen may also display the status of the timer 16. It is envisaged that the recording means 32 may store details such as the date, and possibly the time, the gas supply system was serviced, any repairs, details of the service engineer and service certificate number e.g. CP12 certificate number. The recording means 32 may also store details, such as the date and time, of all other events and user interactions, such as the activation of the warning system, the cut-off valve 12 and/or the overriding means 24.

In a preferred embodiment, it is envisaged that access to the resetting means 26 may be limited. Preferably only an authorised person, for example, the service engineer can gain access to the reset means 26. Access to the resetting means 26 may be limited by, for example, hiding the resetting button 21D or requiring a special tool to access or activate the resetting button 21D. In a preferred embodiment the reset means may comprise a time sensitive button 21 D. This would preferably prevent the resetting means to be activated by accident. The control unit 10 may therefore serve as a means of recording the service history of the gas supply system, proof of regular maintenance and/or an electronic back up to the service history details. Preferably the service details are available to a user so that, for example, the contact details of a previous service engineers may be available so that the same service engineer may be contacted again.

In a preferred embodiment, access to the overriding means 24 button 21C is limited. For example as shown in Figure 4 the button 21C for the overriding means 24 may be provided behind a breakable seal 30. If the user wishes to activate the overriding means 24 they must break the seal 30. By breaking the seal, a user is acknowledging that they are restarting a gas supply system that has not been serviced. In a preferred embodiment the seal explains the risks of activating the overriding means 24 and comprises a disclaimer. Preferably, if the seal 30 is broken to activate the overriding means 24 the seal 30 is replaced when the gas supply system is serviced such that the seal 30 must be again broken the next time the overriding means 24 is activated.

In a preferred embodiment, access to the controlling means 22 button 21B is limited. Preferably the controlling means button 21B is only accessible by an authorised person. As shown in Figure 4 the button 21 B may be provided behind a breakable seal 30. Alternatively the controlling means 22 button 21B may be hidden or required a special tool to access or activate the controlling means 24. As shown in Figure 4 the controlling means 22 button 21B comprises a paper clip-operable button provided behind a seal 30 such that the seal 30 must be broken and a tool such as a paper clip used to activate the controlling means 22.

In a preferred embodiment, the control unit 10 comprises means for sending a signal to a remote receiver (not shown). Preferably the signal indicates the status of the control unit 10 to a second user. For example the control unit 10 may send a signal to a remote receiver indicating that the warning system or the cut-off device controlling system has been activated. More preferably the control unit 10 may send a signal indicating that the overriding means 24 has been activated and that an un-serviced gas supply is being used. The control unit may be adapted to send a signal to a mobile phone.

In a preferred embodiment, the cut-off valve 12 comprises a filter which may alleviate copper sulphide or "black dust" which is known to cause problems in gas systems and cause them to lock out.

Optionally, control units embodying the invention may include, the connected to or otherwise associated with gas detector, and in particular a carbon monoxide detector, for detecting levels of gas in, for example, the vicinity of the control unit 10 and/or locations associated with the control unit. The control unit may be configured to issue a warning signal and/or cut off the fuel supply in the event that the level of detected gas exceeds a predetermined threshold. The control unit may be connected to a smoke detector and may be configured to issue a wanring signal and/or cutoff the fuel supply in the event of smoke detection.

It is envisaged that the control unit 10 may be adapted so that the warning system and/or cut-off system could be used for other devices that need regular servicing e.g. medical equipment, cars, lighting. The control unit 10 may be programmed to activate the warning system and possibly the cut-off controlling system at any time, depending on the frequency of servicing required. For example, the warning system may be used to warn a user that a lighting system requires servicing. The timer 16 would be programmed to activate the warning system when the next regular service was due. Having the lighting system serviced would reset the warning system however if the system is not serviced the warning system would be activated to warn a user that the lighting system has not been serviced and that a service should be arranged.

The control unit may perform regular self tests and checks and may re-boot periodically to eliminate "soft errors". The control unit may implement an "absolute timer" which may run in conjunction with the real time clock to protect against clock corruption errors.

In a preferred embodiment, the warning system and cut-off system are activated at a time when the users are most likely to notice the activation, for example in the evening time.

The present invention is not limited to the embodiment(s) described herein, which may be amended or modified without departing from the scope of the present invention.

## Claims

1. A control unit (10), connectable to a cut-off valve (12) of a fuel supply system, the control unit comprising a warning system; a cut-off valve controlling system; and a reset system (26), wherein the warning system comprises a timer (16) and a means (18) for generating at least one alarm signal when the timer (16) has counted a first pre-programmed period of time **characterised in that** the cut-off valve controlling system comprises said timer and means for controlling said cut-off valve, the cut-off valve controlling means (22) being automatically activated when the timer has counted a second pre-programmed period of time such that the warning system serves to warn users that the fuel supply system is due a service after said first pre-programmed period of time and the cut-off valve controlling system serves to cut-off the fuel supply system if a service is not carried out before said second pre-programmed period of time.

2. A control unit as claimed in claim 1, wherein the cut-off valve controlling means (22) is also activatable independently of the timer (16).

3. A control unit as claimed in claim 2, wherein the cut-off valve (12) is activatable independently by way of a button or switch (21B).

4. A control unit as claimed in any preceding claim, wherein the cut-off valve (12) is operable between an open state and a closed state, the cut-off valve controlling means being activatable to operate the cut-off valve between said open state and said closed state.

5. A control unit as claimed in any preceding claim, wherein the reset system (26) comprises means for re-programming the timer (16) to count the first and second periods of time and means for causing the cut-off valve (12) to adopt an open state such that the warning system and cut-off device controlling system are reset.

6. A control unit as claimed in claim 5, wherein the reset system (26) is activatable independently by way of a button or switch or other manual input (21 D).

7. A control unit as claimed in any preceding claim, wherein the cut-off valve controlling system comprises means (24) for overriding the cut-off valve controlling means (22).

8. A control unit as claimed in claim 7, wherein the overriding means (24) is activatable independently by way of a button or switch (21C).

9. A control unit as claimed in claim 7 or claim 8 when dependent upon claim 2, wherein the overriding means (24) can only be activated when the controlling means is automatically activated as a result of the timer counting a second pre-programmed period of time and not when the controlling means is independently activated.

10. A control unit as claimed in any preceding claim, wherein the resetting means is activatable only by way of the fuel supply system being serviced.

11. A control unit as claimed in any preceding claim, wherein the control unit (10) comprises means for recording information relating to the date and/or time of actions of the control device and/or and user interactions with the control device.

12. A control unit as claimed in any preceding claim, wherein the control device is adapted to control the operation of the warning system and/or the cut-off valve controlling system in response to a signal from an external sensor, such as one or more of a carbon monoxide sensor, a smoke detector and a fire alarm.

## Patentansprüche

1. Steuereinheit (10), die an ein Absperrventil (12) eines Brennstoffversorgungssystems angeschlossen werden kann, wobei die Steuereinheit ein Warnsystem; ein Absperrventil-Steuersystem; und ein Rückstellsystem (26) aufweist, wobei das Warnsystem einen Timer (16) und ein Mittel (18) zum Erzeugen mindestens eines Alarmsignals aufweist, wenn der Timer (16) eine erste vorprogrammierte Zeitspanne gezählt hat, **dadurch gekennzeichnet, dass** das Absperrventil-Steuersystem den Timer und Mittel zum Steuern des Absperrventils aufweist, und das Absperrventil-Steuermittel (22) automatisch aktiviert wird, wenn der Timer eine zweite vorprogrammierte Zeitspanne gezählt hat, so dass das Warnsystem zum Warnen von Benutzern dient, dass eine Wartung des Brennstoffversorgungssystems nach der ersten vorprogrammierten Zeitspanne ansteht, und das Absperrventil-Steuersystem dazu dient, das Brennstoffversorgungssystem abzusperren, wenn keine Wartung vor der zweiten vorprogrammierten Zeitspanne durchgeführt wird.

2. Steuereinheit nach Anspruch 1, bei der das Absperrventil-Steuermittel (22) auch unabhängig von dem Timer (16) aktiviert werden kann.

3. Steuereinheit nach Anspruch 2, bei der das Absperrventil (12) unabhängig mittels einer Taste oder eines Schalters (21B) aktiviert werden kann.

4. Steuereinheit nach einem vorhergehenden Anspruch, bei der das Absperrventil (12) zwischen einem offenen Zustand und einem geschlossenen Zustand betätigt werden kann, wobei das Absperrventil-Steuermittel aktiviert werden kann, um das Absperrventil zwischen dem offenen und dem geschlossenen Zustand zu betätigen.

5. Steuereinheit nach einem vorhergehenden Anspruch, bei der das Rückstellsystem (26) Mittel zum Neuprogrammieren des Timers (16), um die erste und zweite Zeitspanne zu zählen, und Mittel zum Veranlassen des Absperrventils (12) aufweist, einen offenen Zustand anzunehmen, so dass das Warnsystem und das Absperreinrichtung-Steuersystem zurückgestellt werden.

6. Steuereinheit nach Anspruch 5, bei der das Rückstellsystem (26) unabhängig mittels einer Taste oder eines Schalters oder einer anderen manuellen Eingabeeinrichtung (21D) aktiviert werden kann.

7. Steuereinheit nach einem vorhergehenden Anspruch, bei der das Absperrventil-Steuersystem Mittel (24) zum Außerkraftsetzen des Absperrventil-Steuermittels (22) aufweist.

8. Steuereinheit nach Anspruch 7, bei der das Mittel (24) zum Außerkraftsetzen unabhängig mittels einer Taste oder eines Schalters (21C) aktiviert werden kann.

9. Steuereinheit nach Anspruch 7 oder Anspruch 8, wenn abhängig von Anspruch 2, bei der das Mittel (24) zum Außerkraftsetzen nur aktiviert werden kann, wenn das Steuermittel automatisch infolge dessen aktiviert wird, dass der Timer eine zweite vorprogrammierte Zeitspanne zählt, und nicht, wenn das Steuermittel unabhängig aktiviert wird.

10. Steuereinheit nach einem vorhergehenden Anspruch, bei der das Rückstellmittel nur aktiviert werden kann, indem das Brennstoffversorgungssystem gewartet wird.

11. Steuereinheit nach einem vorhergehenden Anspruch, wobei die Steuereinheit (10) Mittel zum Aufzeichnen von Informationen bezüglich dem Datum und/oder der Zeit von Aktionen der Steuereinrichtung und/oder Benutzerinteraktionen mit der Steuereinrichtung aufweist.

12. Steuereinheit nach einem vorhergehenden Anspruch, bei der die Steuereinrichtung eingerichtet ist, um den Betrieb des Warnsystems und/oder des Absperrventil-Steuersystems als Reaktion auf ein Signal von einem externen Sensor zu steuern, wie zum Beispiel einem oder mehreren eines Kohlenmonoxidsensors, eines Rauchdetektors und eines Feueralarms.

## Revendications

1. Unité de commande (10), en mesure de se connecter à une soupape de coupure (12) d'un système d'alimentation en carburant, l'unité de commande comportant un système d'avertissement ; un système de commande de la soupape de coupure ; et un système de réenclenchement (26), dans laquelle le système d'avertissement comporte un temporisateur (16) et un moyen (18) destiné à produire au moins un signal d'alarme quand le temporisateur (16) a laissé s'écouler une première période de temps préprogrammée, **caractérisée en ce que** le système de commande de la soupape de coupure comporte ledit temporisateur et un moyen destiné à commander la soupape de coupure, le moyen de commande (22) de la soupape de coupure étant automatiquement activé quand le temporisateur a laissé s'écouler une seconde période de temps préprogrammée de sorte que le système d'avertissement sert à signaler aux utilisateurs que le système d'alimentation en carburant doit être soumis à une opération d'entretien après ladite première période de temps préprogrammée et le système de commande de la soupape de coupure sert à couper le système d'alimentation en carburant si une opération d'entretien n'est pas effectuée avant ladite seconde période de temps préprogrammée.

2. Unité de commande selon la revendication 1, dans laquelle le moyen de commande (22) de la soupape de coupure est également en mesure d'être activé indépendamment du temporisateur (16).

3. Unité de commande selon la revendication 2, dans laquelle la soupape de coupure (12) est en mesure d'être activée indépendamment par le biais d'un bouton ou d'un interrupteur (21 B).

4. Unité de commande selon l'une quelconque des revendications précédentes, dans laquelle la soupape de coupure (12) est en mesure de fonctionner entre un état ouvert et un état fermé, le moyen de commande de la soupape de coupure étant en mesure d'être activé afin de faire fonctionner la soupape de coupure entre ledit état ouvert et ledit état fermé.

5. Unité de commande selon l'une quelconque des revendications précédentes, dans laquelle le système de réenclenchement (26) comporte un moyen destiné à reprogrammer le temporisateur (16) pour laisser s'écouler les première et seconde périodes de temps préprogrammées et un moyen destiné à amener la soupape de coupure (12) à adopter un état ouvert de telle sorte que le système d'avertissement et le système de commande du dispositif de coupure sont réenclenchés.

6. Unité de commande selon la revendication 5, dans laquelle le système de réenclenchement (26) est en mesure d'être activé indépendamment par le biais d'un bouton ou d'un interrupteur ou de toute autre entrée manuelle (21D).

7. Unité de commande selon l'une quelconque des revendications précédentes, dans laquelle le système de commande de la soupape de coupure comporte un moyen (24) destiné à annuler le moyen de commande (22) de la soupape de coupure.

8. Unité de commande selon la revendication 7, dans laquelle le moyen d'annulation (24) est en mesure d'être activé par le biais d'un bouton ou d'un interrupteur (21C).

9. Unité de commande selon la revendication 7 ou la revendication 8, lorsqu'elle est dépendante de la revendication 2, dans laquelle le moyen d'annulation (24) ne peut être activé que quand le moyen de commande est automatiquement activé en conséquence du temporisateur laissant s'écouler une seconde période de temps préprogrammée et ne peut pas l'être quand le moyen de commande est activé indépendamment.

10. Unité de commande selon l'une quelconque des revendications précédentes, dans laquelle le moyen de réenclenchement est en mesure de n'être activé que s'il y a eu réalisation d'une opération d'entretien du système d'alimentation en carburant.

11. Unité de commande selon l'une quelconque des revendications précédentes, dans laquelle l'unité de commande (10) comporte un moyen destiné à enregistrer des informations se rapportant à la date et/ou à l'heure des actions du dispositif de commande et/ou des interactions de l'utilisateur avec le dispositif de commande.

12. Unité de commande selon l'une quelconque des revendications précédentes, dans laquelle le dispositif de commande est adapté à des fins de commande du fonctionnement du système d'avertissement et/ou du système de commande de la soupape de coupure en réponse à un signal provenant d'un capteur externe, tel un ou plusieurs parmi un capteur de monoxyde de carbone, un détecteur de fumée et un avertisseur d'incendie.
